# DEMANDE DE BREVET EUROPEEN

(11) **EP 1 316 710 A1**
(43) Date de publication de la demande: **04.06.2003**
(21) Numéro de dépôt: 02292953.3
(22) Date de dépôt: 29.11.2002
(51) Int. Cl.: F02F 3/26, F02B 23/06

(54) **Piston pour moteur à combustion interne et moteur associé**

(30) Priorité: 30.11.2001 FR 0115484
(71) Demandeur: Renault s.a.s., 92100 Boulogne Billancourt (FR)
(72) Inventeur: Brun, Eric Pierre, 75013 Paris (FR); Passerel, Daniel, 92500 Rueil-Malmaison (FR)

(57) **Abrégé**

Un piston (5) pour moteur à combustion interne, selon un aspect de l'invention, destiné à coulisser avec un mouvement alternatif dans un alésage (3) d'un cylindre (2), est du type comprenant une face supérieure (27) pourvue d'une cavité (26) apte à coopérer à la formation d'une chambre de combustion. La cavité (26) comprend une surface rainurée (30) permettant de modifier l'écoulement turbulent d'un fluide en contact avec ladite surface (30).

## Description

La présente invention concerne un piston pour moteur à combustion interne, et plus particulièrement un piston possédant une cavité de combustion.

Un moteur à combustion interne comprend généralement un carter dans lequel est formé au moins un cylindre, une culasse fermant une extrémité supérieure du cylindre, et un piston destiné à coulisser avec un mouvement alternatif entre deux positions extrêmes dans le cylindre. La culasse comprend des moyens d'admission de gaz et d'injection de carburant entre le piston et la culasse. La culasse comprend également des moyens de refoulement du mélange du carburant et des gaz d'admission, après combustion du carburant. Le piston comprend sur une face supérieure orientée vers la culasse une cavité formant une paroi d'une chambre de combustion.

On cherche généralement à réduire la consommation en carburant du moteur, et à limiter l'émission de polluants tels que des hydrocarbures imbrûlés. Pour ce faire, on peut améliorer la combustion du carburant en agissant sur la qualité du mélange entre le carburant et les gaz d'admission. Il importe d'obtenir un mélange le plus homogène possible.

Trois phénomènes principaux participent à la formation du mélange carburant/gaz d'admission. L'injection du carburant, après que les gaz d'admission aient été introduits dans le cylindre, permet de pulvériser le carburant en fines gouttelettes dans les gaz d'admission. Plus les gouttelettes sont fines, plus on peut obtenir un mélange homogène dans lequel une grande partie du carburant est directement en contact avec les gaz d'admission. L'injection du carburant provoque également un mouvement d'air favorisant le mélange. Cependant, le carburant a tendance à être projeté contre la surface du piston, ce qui provoque une mauvaise combustion du mélange.

Un effet de chasse provoque également des mouvements d'air favorisant le mélange. Le mouvement de chasse est un mouvement d'air entrant ou sortant de la cavité formée sur la face supérieure du piston, lorsque le piston est proche de sa position extrême supérieure, appelée point mort haut, et vient à proximité de la culasse de sorte que le volume de la chambre de combustion est réduit. Lorsque le piston se rapproche de la culasse, un mouvement de « squish » correspond à un mouvement d'entrée de gaz dans la cavité, le mouvement des gaz étant sensiblement orienté radialement. Lorsque le piston s'éloigne de la culasse, le mouvement est un mouvement dit de « squish inverse » de sortie des gaz de la cavité avec un mouvement d'éloignement radial. Par la suite, on parlera d'effet de « squish », en désignant indifféremment « squish » et « squish inverse ».

Afin d'améliorer encore le mélange du carburant et des gaz d'admission, on peut provoquer un mouvement tourbillonnaire, ou « swirl », des gaz d'admission autour d'un axe sensiblement identique à l'axe du cylindre. Ce mouvement tourbillonnaire est provoqué par les moyens d'admission de la culasse. Le mouvement tourbillonnaire comprend une composante principale circulaire. Le mouvement tourbillonnaire est entretenu lors de chaque cycle du moteur, de sorte que le mouvement tourbillonnaire est permanent, tout en étant plus important lorsque le piston se situe dans une position proche du point mort haut.

Cependant, la combinaison de ces trois phénomènes ne permet pas, en toutes circonstances, et selon le régime du moteur, d'obtenir un mélange des gaz d'admission et du carburant pulvérisé satisfaisant, permettant de limiter la consommation et l'émission de polluants.

On connaît par le document EP 947 677, un piston comprenant une paroi circulaire concave constituant une paroi de la chambre de combustion et sur laquelle sont disposés des déviateurs de jets. Les déviateurs de jets permettent de dévier les jets de carburant formés par un moyen d'injection de carburant, afin d'éviter les risques d'impact de jets de carburant sur la paroi, et pour provoquer un meilleur mélange.

Néanmoins, ce dispositif est difficile à réaliser, et ne permet pas d'obtenir des résultats satisfaisants.

L'invention propose un piston pour moteur à combustion interne permettant d'améliorer l'homogénéisation d'un mélange de gaz et de carburant.

L'invention propose également un piston pour moteur à combustion interne permettant de limiter les pertes d'énergie sous forme de chaleur et de frottement, lors d'un cycle de combustion d'un moteur thermique.

L'invention propose encore un piston pour moteur à combustion interne de réalisation facile et de coût de fabrication faible.

Un piston pour moteur à combustion interne, selon un aspect de l'invention, destiné à coulisser avec un mouvement alternatif dans un alésage d'un cylindre, est du type comprenant une face supérieure pourvue d'une cavité apte à coopérer à la formation d'une chambre de combustion. La cavité comprend une surface rainurée permettant de modifier l'écoulement turbulent d'un fluide en contact avec ladite surface.

Comme cela est indiqué dans le document Coustols « Effet des parois rainurées (« riblets ») sur la structure d'une couche limite turbulente - Premier colloque international de microhydrodynamique. PARIS, La Défense, 16 et 17 octobre 2000 -, l'utilisation de surfaces rainurées permet de diminuer le frottement dû à l'écoulement turbulent d'un fluide en contact avec une surface, lorsque l'écoulement s'effectue selon la direction des rainures de la surface rainurée.

Dans le cas d'un moteur à combustion interne, du type décrit ci-dessus, l'écoulement du fluide formé par les gaz d'admission, ou par le mélange du carburant et des gaz d'admission sur les parois de la chambre de combustion, est turbulent. Il en résulte une perte d'énergie due au frottement turbulent.

Dans un mode de réalisation préféré, les rainures sont orientées dans une direction sensiblement identique à une direction privilégiée d'écoulement du fluide par rapport à la surface de la cavité. On limite le frottement turbulent dû à l'écoulement du fluide dans une direction privilégiée. De plus, on favorise l'écoulement du fluide selon la direction privilégiée.

Dans un mode de réalisation, les rainures sont orientées dans une direction sensiblement perpendiculaire à une seconde direction privilégiée d'écoulement du fluide. Ainsi, les rainures sont la plupart du temps orientées dans le sens de la direction privilégiée d'écoulement du fluide pour réduire le frottement de turbulence, et les rainures sont orientées perpendiculairement à une seconde direction privilégiée d'écoulement du fluide pour permettre, dans certaines conditions où la seconde direction privilégiée est plus prépondérante, d'augmenter les turbulences et de favoriser le mélange du carburant et des gaz d'admission.

Les rainures peuvent posséder des sections droites à profil triangulaire en V, en L, ou en U. Ces types de rainures sont adaptés pour permettre une réduction importante des frottements d'écoulement turbulent.

De préférence, le rapport entre la hauteur d'une rainure et l'espacement entre deux rainures est compris entre 0,1 et 1.

Dans un moteur à combustion interne, l'écoulement dû à l'effet de « squish » est plus particulièrement important lorsque le piston se situe non loin d'une position extrême dans laquelle le volume de la chambre de combustion est minimal. L'écoulement dû à l'effet de « swirl », qui est prépondérant par rapport à l'écoulement dû à l'effet de « squish », est permanent, tout en étant plus important lorsque le piston se situe dans une position proche du point mort haut. La direction privilégiée d'écoulement du fluide dans le cylindre est donc circulaire, car l'effet de « swirl » est permanent et prépondérant. Le piston étant en mouvement de translation dans le cylindre, le mouvement du fluide par rapport au piston est sensiblement hélicoïdal, tout en possédant une direction privilégiée principale circulaire plus importante que la composante axiale.

Ainsi, afin de limiter le frottement de turbulence dû à l'écoulement des gaz d'admission ou du mélange sur les parois de la cavité du piston selon la direction privilégiée d'écoulement provoqué par l'effet de « swirl », il est souhaitable d'orienter les rainures de la surface de la cavité de façon sensiblement circulaire. Par orientation circulaire, on entend que les rainures sont sensiblement de révolution autour d'un axe, qui est un axe de révolution du piston ou du cylindre, ou qui est de préférence l'axe principal d'inertie de rotation des gaz en mouvement tourbillonnaire circulaire provoqué par l'effet de « swirl ». Dans ce cas, on constate que les rainures sont orientées sensiblement perpendiculairement à la seconde direction privilégiée d'écoulement du fluide provoqué par l'effet de « squish ».

Par ailleurs, l'orientation des rainures favorise un écoulement du fluide en contact avec la paroi selon la direction des rainures. L'orientation des rainures selon la direction d'écoulement principale due à l'effet de « swirl » a pour effet supplémentaire de permettre une amplification de l'effet de « swirl » favorisant encore un mélange homogène des gaz d'admission et du carburant.

On peut obtenir une surface rainurée par une opération d'usinage de la surface de la cavité qui consiste à disposer le piston à rotation sur une machine d'usinage, et à venir former la surface de la cavité à l'aide d'un outil dont on commande l'enfoncement et l'avancement en fonction de la vitesse de rotation pour obtenir le rainurage souhaité. On peut ainsi obtenir la surface rainurée à partir d'un nombre limité de rainures hélicoïdales, orientées sensiblement de façon circulaire. Cette phase d'usinage peut être une phase d'usinage normale en vue de l'obtention de la cavité, on prévoit alors les paramètres d'usinage de façon à former une paroi non pas lisse mais pourvue de rainures. Ce mode de réalisation est plus particulièrement adapté à la formation de rainures en V. Eventuellement, on peut aussi prévoir que les rainures sont circulaires et coaxiales.

L'invention concerne également un moteur à combustion interne comprenant un carter pourvu d'au moins un cylindre fermé par une culasse, comprenant des moyens d'admission et de refoulement des gaz dans une chambre limitée par la culasse et un piston destiné à coulisser avec un mouvement alternatif dans le cylindre, les moyens d'admission étant aptes à provoquer un mouvement circulaire des gaz lors de l'admission desdits gaz dans la chambre.

La présente invention et ses avantages seront mieux compris à l'étude de la description détaillée de modes de réalisation pris à titre d'exemples non-limitatifs et illustrés par les dessins annexés, sur lesquels :
- la figure 1 représente une vue en coupe du cylindre d'un moteur, comprenant un piston selon un aspect de l'invention ;
- la figure 2 représente une vue schématique partielle du piston selon la figure 1 et de l'écoulement du fluide provoqué par l'effet de « squish » ;
- la figure 3 représente une vue schématique partielle du piston selon la figure 1 et de l'écoulement provoqué par l'effet de « swirl » ;
- les figures 4 à 6 illustrent des développés de profils possibles de rainurage de la surface de la cavité.

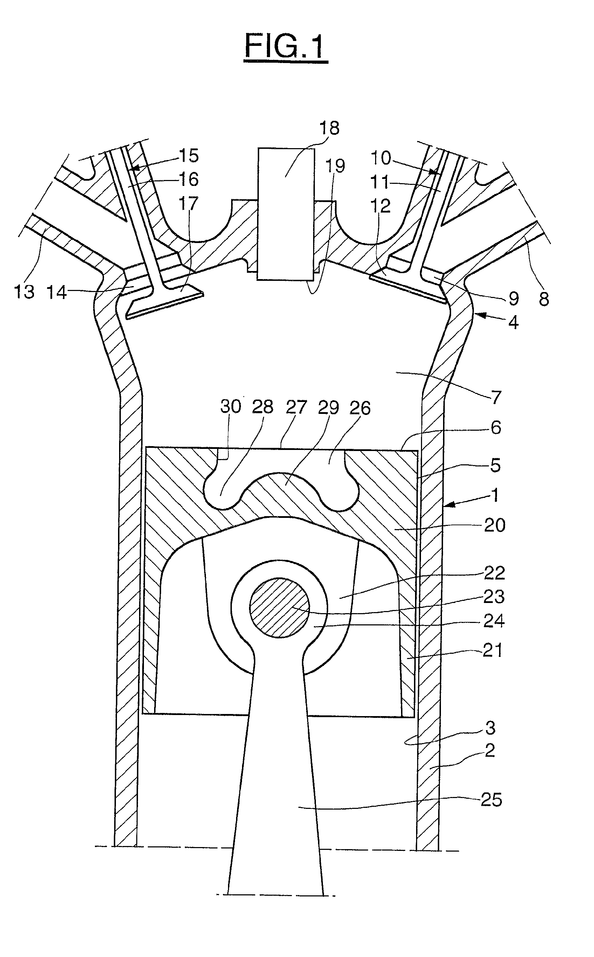

Sur la figure 1, un carter de moteur 1 comprend un cylindre 2 pourvu d'un alésage 3 et fermé à une extrémité supérieure par une culasse 4. Un piston 5 coulisse dans l'alésage 3 du cylindre 2, en formant entre la surface supérieure 6 du piston et la culasse 4 une chambre 7.

La culasse 4 comprend des moyens d'admission de gaz d'admission formés par une conduite 8 débouchant dans la chambre 7 par une ouverture 9, et une soupape de commande 10 apte à être actionnée entre une position fermée d'obturation de l'ouverture 9 et une position ouverte d'admission des gaz. La soupape 10 comprend une tige de commande 11 et une tête d'obturation 12 de forme tronconique, dont la surface périphérique inclinée vient en contact avec une surface correspondante de l'ouverture 9 formant siège de soupape pour fermer l'ouverture 9.

La culasse 4 comprend des moyens de refoulement formés par une conduite d'échappement 13 débouchant dans la chambre 7 par une ouverture 14 apte à être fermée par une soupape de commande 15 comprenant une tige d'actionnement 16 et une tête d'obturation 17.

La culasse 4 comprend également un moyen d'injection de carburant formé par un injecteur 18 recevant à une entrée extérieure le carburant et possédant à une extrémité en saillie dans la chambre 7 une tête d'injection 19 apte à pulvériser le carburant sous forme de fines gouttelettes dans la chambre 7 au moment approprié.

Le piston 5 comprend une tête 20 dont la surface supérieure 6 forme une paroi de la chambre 7, et une jupe 21 améliorant le guidage du piston en translation dans le cylindre 2. Le piston 5 comprend également une patte de fixation 22 comprenant un axe 23 sur lequel est fixée la tête 24 d'une bielle 25 permettant de transformer le mouvement de translation du piston 5 en mouvement de rotation d'un vilebrequin, non représenté sur la figure.

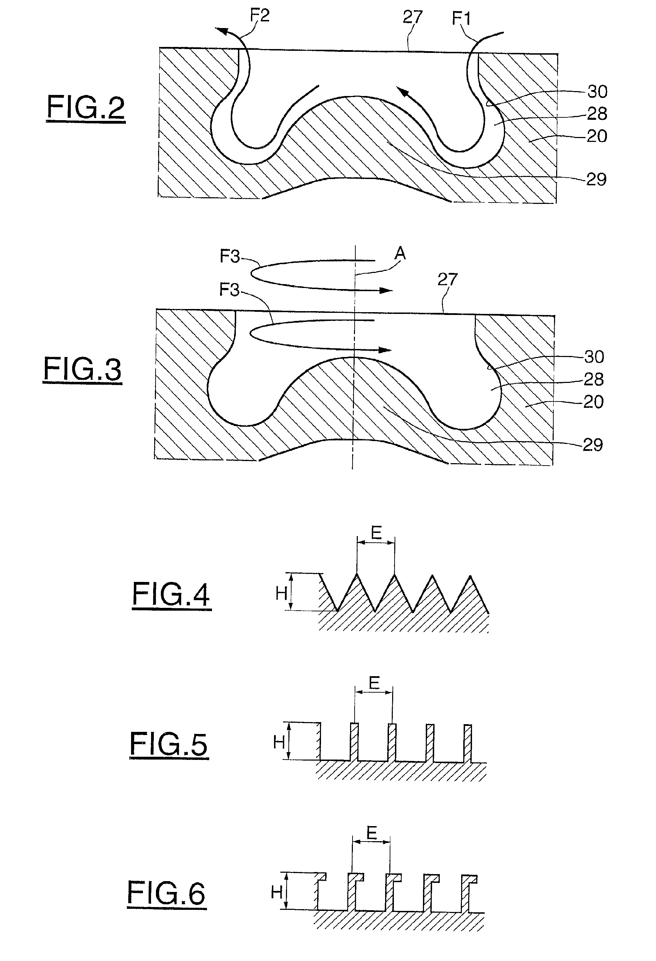

La surface 6 du piston 5 comprend une cavité centrale 26. Dans le mode de réalisation de la figure 2, pris à titre d'exemple nullement limitatif, la cavité centrale 26 est symétrique de révolution selon l'axe principal du piston 5, et comprend une ouverture 27, une gorge annulaire 28 et une bosse centrale 29. La cavité 26 est délimitée par une surface rainurée 30. Pour améliorer la clarté des dessins, la surface 30 a été représenté lisse sur les figures 1 à 3. Les profils de section des rainures sont représentés plus particulièrement sur les figures 4 à 6.

Lors de la rotation du vilebrequin du moteur, le piston 5 se déplace entre une position de point mort bas éloignée de la culasse 4, et une position de point mort haut proche de la culasse 4.

Sur la figure 2, une flèche F1 illustre le mouvement radial d'entrée du fluide provoqué par l'effet de « squish ». Une flèche F2 illustre le mouvement d'éloignement radial du fluide provoqué par l'effet de « squish inverse ».

Sur la figure 3, une flèche F3 illustre le mouvement sensiblement circulaire du fluide autour d'un axe principal A du piston 5, provoqué par l'effet de « swirl ».

Comme indiqué précédemment, le fluide possède par rapport à la surface 30 de la cavité 26 une première direction privilégiée d'écoulement permanent circulaire provoqué par l'effet de « swirl ». En conséquence, on oriente les rainures de la surface rainurée 30 selon une direction sensiblement identique à la direction privilégiée d'écoulement du fluide provoqué par l'effet de « swirl », pour réduire les frottements de turbulence. Les rainures sont donc sensiblement circulaires, c'est-à-dire que les rainures se situent dans un plan perpendiculaire à la figure 3 et à l'axe A. Le plan de coupe étant un plan radial du piston 5, les rainures débouchent perpendiculairement au plan de la figure 3. Ainsi, on peut améliorer le rendement du moteur par une limitation des pertes sous forme de création d'énergie cinétique turbulente et de perte par échange de chaleur.

Par ailleurs, comme la seconde direction privilégiée d'écoulement, correspondant à l'effet de « squish », est perpendiculaire à la première direction d'écoulement correspondant à l'effet de « swirl », les rainures de la surface rainurée 30 sont orientées selon une direction perpendiculaire à la seconde direction radiale privilégiée d'écoulement du fluide, correspondant à l'effet de « squish ».

On a vu que l'écoulement provoqué par l'effet de « squish » est particulièrement présent lorsque le piston se trouve dans une position proche du point mort haut. Ainsi, les rainures perpendiculaires à l'écoulement provoqué par l'effet de « squish » provoquent des turbulences supplémentaires lors d'une phase de détente, intervenant juste après l'injection du carburant, et favorisant ainsi l'homogénéisation du mélange et la réduction de l'émission de polluants, et la réduction de la consommation.

Par ailleurs, et comme expliqué précédemment, l'effet de « swirl » est permanent, tout en étant accentué lorsque le piston est proche du point mort haut. L'orientation selon la première direction privilégiée d'écoulement provoqué par l'effet de « swirl » des rainures permet de favoriser l'écoulement du fluide selon la direction des rainures. Les rainures permettent donc une amplification de l'effet de « swirl » provoqué par les moyens d'admission, notamment lorsque l'effet de « squish » est faible, c'est-à-dire lorsque le piston se situe dans une position éloignée du point mort haut.

Comme cela est indiqué dans le document cité, bien que les rainures ne soient pas orientées exactement selon le sens de l'écoulement privilégié du fluide par rapport à la surface de la cavité du piston, qui est en translation rectiligne alternative avec une vitesse axiale variable, l'efficacité des rainures reste sensible, dans une certaine limite d'angle entre le sens d'écoulement du fluide et la direction des rainures.

Sur les figures 4 à 6, on a représenté les développés de différents profils de rainurage de la surface 30 qui peuvent convenir.

Sur la figure 4, on a représenté des rainures à profil triangulaire en V. Les rainures possèdent une hauteur H et un espacement entre deux rainures E. Ce type de rainures peut facilement être obtenu lors de la réalisation de la cavité 26, et notamment lors de la formation de la surface 30. Il suffit de disposer le piston à rotation, et de venir former la surface 30 à l'aide d'un outil, tout en commandant le paramètre d'avancement de l'outil pour former non pas une surface sensiblement lisse, mais une surface rainurée.

La figure 5 illustre des rainures possédant une section en U possédant une hauteur H et un espacement entre deux rainures E.

La figure 6 illustre des rainures à section en L possédant une hauteur H et un espacement entre deux rainures E.

Le rapport entre l'espacement entre deux rainures et la hauteur des rainures est un facteur déterminant de la réduction de frottement de turbulence qui peut être apportée par la formation de rainures sur la surface 30. Le rapport choisi dépend des conditions d'écoulement du fluide dans la cavité du piston. On choisit de préférence un rapport entre la hauteur et l'espacement compris entre 0,1 et 1. La hauteur des rainures, dans le cas d'une application à la cavité d'un piston d'un moteur à combustion interne, peut être comprise entre 0,1 et 0,5 mm.

Grâce à l'invention, on obtient un piston dont la cavité de combustion est adaptée pour permettre une limitation du frottement de turbulence des gaz d'admission ou du mélange du carburant et des gaz d'admission avec la surface de la cavité. On permet ainsi une amélioration des performances du moteur en limitant les pertes d'énergie de création d'énergie cinétique et d'échange thermique de l'écoulement turbulent. De plus, le piston, selon un aspect de l'invention, permet encore une amélioration de l'homogénéisation du mélange en amplifiant l'effet de « swirl » et en augmentant les turbulences provoquées par l'effet de « squish ». De plus, le piston selon l'invention peut être obtenu facilement, et à faible coût de fabrication.

## Revendications

1. Piston (5) pour moteur à combustion interne, destiné à coulisser avec un mouvement alternatif dans un alésage (3) d'un cylindre (2), du type comprenant une face supérieure (27) pourvue d'une cavité (26) apte à coopérer à la formation d'une chambre de combustion, **caractérisé par le fait que** la cavité (26) comprend une surface rainurée (30) permettant de modifier l'écoulement turbulent d'un fluide en contact avec ladite surface (30).

2. Piston selon la revendication 1, **caractérisé par le fait que** les rainures sont orientées dans une direction sensiblement identique à une direction privilégiée d'écoulement du fluide par rapport à la surface de la cavité.

3. Piston selon la revendication 2, **caractérisé par le fait que** les rainures sont orientées dans une direction sensiblement perpendiculaire à une seconde direction privilégiée d'écoulement du fluide par rapport à la surface de la cavité.

4. Piston selon l'une quelconque des revendications précédentes, **caractérisé par le fait que** les rainures possèdent des sections droites à profil triangulaire en V, en L, ou en U.

5. Piston selon l'une quelconque des revendications précédentes, **caractérisé par le fait que** le rapport entre la hauteur (H) d'une rainure et l'espacement (E) entre deux rainures adjacentes est compris entre 0,1 et 1.

6. Piston selon l'une quelconque des revendications précédentes, **caractérisé par le fait que** les rainures sont circulaires.

7. Piston selon l'une quelconque des revendications précédentes, **caractérisé par le fait que** la surface rainurée est formée à partir d'un nombre limité de rainures hélicoïdales.

8. Moteur à combustion interne comprenant un carter (1) pourvu d'au moins un cylindre (2) fermé par une culasse (4), comprenant des moyens d'admission (8, 10) et de refoulement (13, 15) des gaz dans une chambre (7) limitée par la culasse (4) et un piston (5) destiné à coulisser avec un mouvement alternatif dans le cylindre (2), les moyens d'admission (8,10) étant aptes à provoquer un mouvement circulaire des gaz lors de l'admission desdits gaz dans la chambre (7), **caractérisé par** le fiat qu'il comprend un piston (5) selon l'une quelconque des revendications précédentes.
